# EUROPEAN PATENT SPECIFICATION

(11) **EP 1 995 058 B1**
(45) Date of publication and mention of the grant of the patent: **09.12.2015**
(21) Application number: 08156814.9
(22) Date of filing: 23.05.2008
(51) Int. Cl.: B32B 27/32, B32B 27/08, B65D 81/34

(54) **Multilayer heat shrinkable cook-in film**
Wärmeschrumpfbare Mehrschichtkochfolie
Film multicouche thermorétrécissable pour cuisson

(30) Priority: 25.05.2007 EP 07108945
(43) Date of publication of application: 26.11.2008
(73) Proprietor: Flexopack S A, 19400 Koropi Attikis (GR)
(72) Inventor: Gkinosatis, Dimitris, 19400, Koropi Attica (GR)
(74) Representative: Isarpatent

(56) References cited:
- WO-A-98/21274
- WO-A-2006/102152
- US-A1- 2006 199 912
- DATABASE WPI Week 200405 Thomson Scientific, London, GB; AN 2004-046492 XP002486457 & JP 2003 159761 A (KUREHA CHEM IND CO LTD) 3 June 2003 (2003-06-03)

## Description

The present invention is directed to a cook-in film and to bags, pouches and the like made therefrom. The invention is further directed to a method of producing and preserving a food product using such a film, bag or pouche and to a packaged food product obtained therefrom.

Many food products are processed in thermoplastic film packages by subjecting the packed product to elevated temperatures produced by, for example, exposure to steam, hot air or immersion into boiling water. This thermal processing is usually called cook-in and the films used for such applications are generally called cook-in films.

A cook-in film must be capable of withstanding exposure to severe temperature conditions like immersion in hot water of a temperature of 70 to 90 °C for a time period of about 4 to 18 hours. During these severe thermal conditions, the film should be able to withstand
1. Opening of the seals
2. Delamination of the different layers of the multilayer structure.

A further desirable effect of the cook-in films is heat shrinkability, which is the ability of a film to shrink under heat conditions so that it conforms tightly to the packed food and gives a good aesthetic appearance.

A further desirable effect is good optical properties, meaning high gloss and low haze of the film, providing a nice presentation to the consumer.

Another desirable effect is the ability of the film to heat seal effectively in commercial bag making machines. The reason for this is that very often, the film is used in the form of a bag (pouch) in which the product is packed under vacuum and then is put in a hot water bath or in a steam container in order to be cooked.

Still another desirable effect is high heat seal strength not only after the heat treatment (cook-in or post pasteurization process) but also before.

Thus, it would be desirable to make a heat shrinkable film combining all these different requirements
1. Resistance to bag opening and delamination
2. High shrinkage
3. Excellent optics
4. Efficient heat sealability

It is also known in the art a similar process called post pasteurization. Many foods require pasteurization after being hermetically packed so that harmful microbes are destroyed. Specific pasteurization requirements may vary from country to country but 1 hour at 95°C is considered a possible limiting case. The film of the invention may be used also to withstand these conditions.

In the prior art, often polypropylene copolymers have been proposed to be used in cook-in applications. These copolymers generally offer high resistance of the seals after the thermal treatment process. But because of their stiff nature, PP polymers often have weak seals during loading filling process that is before the cook-in process. In the real market conditions this weakness may result in many failures of the seals especially in cases where the loaded items are heavy.

### SUMMARY OF THE INVENTION

It is, therefore, an object of the present invention to provide a heat shrinkable multilayer film having excellent optics, efficient heat sealability, resistance to bag opening and delamination, and sealstrength during loading. It is a further object of the present invention to provide a cook-in film having the above properties.

These objects are achieved by the subject-matter of the independent claims. Preferred embodiments are set forth in the dependent claims.

The invention is based on the surprising insight that multilayer films for high temperature applications (up to about 95°C; so called cook-in films) may be produced by introducing a heat sealing layer comprising an olefin block copolymer.

It surprisingly turned out that the multilayer films of the present invention remained stable under these circumstances, i.e. did not show opening of the seals and delamination. Moreover, the multilayer film of the invention showed an improved heat sealability due to using an inner heat sealing layer having the above properties.

Thus, a very stable multilayer film for cook-in applications could be generated having improved characteristics regarding opening of the seals and delamination, but also regarding heat-shrinkability.

Briefly the invention provides an oriented heat shrinkable film comprising a heat sealing layer comprising an olefin block polymer. Other layers may include an oxygen barrier layer and an outer layer comprising polyolefin polymer or styrene butadiene copolymer.

The definitions used in the following are as follows:
The term "film" refers to a flat or tubular flexible structure of thermoplastic material. A "cook-in film" is more specifically defined as being a film adapted for high temperature applications, e.g. treatment with hot water at temperatures between about 70° - 98°C, e. g. up to about 95°C. The time period for subjecting the packaged food product to the elevated temperature is between about 1-18 hours.

The term "heat shrinkable" refers to a film that shrinks at least 10% in at least one of the longitudinal and transverse directions when heated at 90°C for 4 seconds. The shrinkability is measured according to ASTM 2732. This test method covers the determination of the degree of unrestrained linear thermal shrinkage at given specimen temperatures of a plastic film and sheeting of 0.76 mm thickness or less.

For the determination of the melting point, the instrumental method used is DSC (differential scanning calorimetry) in accordance with ASTM D 3418.

All measurement methods mentioned herein are readily available for the skilled person. For example, they can be obtained from the American National Standards Institute at: www.webstore.ansi.org

The phrase "longitudinal direction" or "machine direction" herein abbreviated "MD" refers to a direction along the length of the film.

The phrase "outside layer" refers to the film layer which comes in immediate contact with the outside environment (atmosphere).

The phrase "inner layer" refers to the film layer that comes in direct contact with the product packed. This is also called "sealing layer" as this layer must be hermetically sealed in order to protect the product from ingress of air.

The term "barrier layer" is the layer providing protection against oxygen coming into the package from the atmosphere. Suitable materials are PVDC, EVOH, polyamide etc.

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra low density polyethylene (ULDPE), metallocene catalysed polymers and polyethylene plastomers and elastomers.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is preferably less than 40 wt.-%.

As used herein the phrase "ethylene vinyl acetate copolymer" refer to copolymers of ethylene and vinyl acetate.

As used herein, the term EVOH refers to saponified products of ethylene vinyl ester copolymers. The ethylene content is typically in the range of 25 to 50 wt.-%.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term polyamide refers to homopolymers and copolymers.

As used herein the term "polypropylene" refers to any homopolymer, copolymer, terpolymer, tetrapolymer etc. that includes mer units of propylene. The term as used in the present application includes homopolymers, random copolymers, propylene alpha olefin copolymers, propylene ethylene copolymers propylene-ethylene-alpha olefin copolymers and other propylene polymers.

As used herein the term "ethylene alpha olefin block copolymer" refers to copolymer comprising hard and soft blocks. Each of hard and soft blocks comprise a copolymer of ethylene and alpha olefin, like propylene, butane, hexane, octene. Typical polymers are described in applications US 20030073785, JP-A-60/35009, US 2006/0199030. Preferably, the molecular weight distribution of the olefin block copolymer is between 1.2 and 3.5.

### DETAILED DESCRIPTION

According to a first aspect, the present invention provides a heat shrinkable film comprising a heat sealing layer comprising an ethylene olefin block copolymer.

More precisely, the heat sealing layer of the multilayer film of the present invention comprises an ethylene octene block copolymer having a melting point of more than 115°C.

In another aspect of the invention, next to the sealing layer there is a layer comprising polypropylene.

PP might be present as a heterogeneous or a homogeneous polymer produced with single site catalyst. It may also be a blend of such a material with the following
1. another PP polymer such as random copolymer or homopolymer(among others)
2. a polyethylene polymer such as an alpha olefin copolymer with density 0.860 to about 0.960 or such as an ethylene ester copolymer
3. a cyclic olefin copolymer
4. a styrene polymer
5. an ionomer or a methacrylic acid copolymer
6. polybutene polymer

In another preferred case, the PP polymer may be blended with an ethylene alpha olefin copolymer which has a vicat softening point less than 100°C.

Examples of polymers that could be useful are
- Homogeneous ethylene alpha olefin copolymers like the EXACT grades from EXXON;
- Homogeneous ethylene alpha olefin copolymers with long chain branching such as the AFFINITY grades from DOW;
- TAFMER linear ethylene alpha olefin copolymers from MITSUI.

The oxygen barrier layer used may include a high oxygen barrier material such as a polyvinylidene chloride homopolymer or copolymer or an ethylene vinyl alcohol copolymer (EVOH). Other oxygen barrier materials are also well known in the art. As example, oxygen barrier materials, also polyamides or polyesters may be used.

In the outside layer the following materials may be used
1. a polypropylene homopolymer or copolymer having a vicat softening point of less than 105°C measured under ASTM D 1525. It is preferably a homogeneous polymer produced with single site catalyst,
2. PP polymer such as random copolymer or homopolymer (among others)
3. Polyethylene polymer such as an alpha olefin copolymer with density 0.860 to about 0.960 or such as an ethylene ester copolymer
4. a cyclic olefin copolymer
5. a styrene polymer
6. a ionomer or a methacrylic acid copolymer.

A preferred version comprises a
1. styrene butadiene copolymer
2. a blend of styrene butadiene copolymer and an ethylene alpha olefin copolymer
3. a reactor made TPO polymer incorporating propylene mer units
4. a blend of a reactor made TPO polymer incorporating propylene mer units and polypropylene homopolymer or copolymer
5. a propylene ethylene polymer with a vicat softening point less than 100°C
6. a blend of two propylene ethylene polymers with a vicat softening point less than 100°C.
7. further preferred is a film which comprises an outside layer incorporating
   - a polypropylene polymer
   - an ethylene alpha olefin copolymer
   - a styrene butadiene polymer
   - a polyamide
   - a polybutene or
   - an EVOH polymer or a combination of one or more thereof.

Between the inner heat sealing layer and the oxygen barrier layer may exist further layers that could comprise any of the polymers mentioned in the possibilities for inner heat sealing layer. Preferred materials are ethylene vinyl acetate, ethylene alpha olefin copolymers, EMA polymers, polypropylene copolymers, polybutylene, styrene homopolymers or copolymers.

Between the outer layer and the oxygen barrier layer may exist further layers that could comprise any of the polymers mentioned in the possibilities for inner heat sealing layer. Preferred materials are ethylene vinyl acetate, ethylene alpha olefin copolymers, EMA polymers, polypropylene copolymers, polybutylene, styrene homopolymers or copolymers.

Any of the layers described above may also include additives well known in the art such as slip agents, antiblock, polymer processing aids, antistatic, antifog, acid scavengers, odour scavengers and the like. A person skilled in the art may select the right additives according to any particular needs.

In a preferred version of the application, the film is irradiated with e beam radiation of levels from 1 to 10 MRAD.

All the percentages indicated in this application are per weight except if differently stated.

### EXAMPLES

### Example 1

A 5 layer film is produced in a double bubble (the double bubble method is described in US 3,456,044, incorporated herein by reference) commercial line with the following structure:
Inner (sealing) layer, 100% EOB 1
Adjacent layer 93% E1+ 7% ADDITIVES
Barrier layer PVDC commercial grade
Adjacent layer 30% M1+ 65% E2+ 5% ADDITIVES
Outer layer 100% EAO1
See table 1,2

### Example 2

A 5 layer film is produced in a double bubble (the double bubble method is described in US 3,456,044) commercial line with the following recipe
Inner(sealing layer), 100% EOB2
Adjacent layer 93% E1+7% ADDITIVES
Barrier layer PVDC commercial grade
Adjacent layer 30% M1+ 65% E2+ 5% ADDITIVES
Outer layer 100%S1

In all the above examples, the thickness of the layers are(in microns)
8, outer layer
10, adjacent layer
4, barrier layer
6, adjacent layer
27, heat sealing layer

### Comparative example

Under exactly the same conditions a commercial product FMXBK was produced.

All the samples were e-beam radiated with a dose of 4 MRAD prior to bag making.

**TABLE 1**

| Type | Description | Manufacturer | Melt Index g/10 min | Density g/cm³ | Melting point ° C. |
|---|---|---|---|---|---|
| E1 | EVA | Dupont 3135 X | 0.35 | 0.93 | 95 |
| E2 | EVA | Dupont 3165 | 0.7 | 0.94 | 89 |
| | | | | | |
| S1 | SB COPOLYMER | DK13 | 10 | 1.01 | |
| M1 | EMA copolymer | ARKEMA LOTRYL 29MAO3 | 2-3,5 | 0,95 | 61 |
| **EOB1** | **Ethylene octene block copolymer** | | | **0.87** | **121** |
| **EOB2** | **Ethylene octene block copolymer** | | | **0**.**88** | |
| **EOA1** | **Ethylene octene random homogenous copolymer** | **Dow PL 1880** | **1** | **0.902** | **100** |

**TABLE 2**

| | HAZE | GLOSS | SHRINKAGE(MD/TD) | |
|---|---|---|---|---|
| Example 1 | 9 | 102 | 35/35 | |
| Example 2 | 7 | 110 | 38/37 | |
| Comparison | 7 | 100 | 32/35 | |

For better evaluation of the resistance of the sealing properties under cook -in conditions, the following experiment was executed.

Material from samples 1-2 and comparative sample were made into bag configuration in a pouch making machine. Then the bags were filled with water and sealed at the open end. Then the bags were put in a hot water bath and cooked at 95°C for 5 hours. After this thermal treatment, the bags were examined if their seals were destroyed and if delamination was noticed.

**Table 3 Results of cook-in test**

| | |
|---|---|
| Example 1 | No bag opened |
| Example 2 | No bag opened |
| Comparison | No bag opened |

Haze is measured according to ASTM D 1003, gloss according to BS 2782 and shrinkage according to ASTM 2732.

### Test for evaluation of seal strength

A bag is clamped at its two edges. A falling weight of 2 kilos is thrown on the interior of the bag from a height of 1.5 meters. Percentage of opened bags is calculated. The results for 1, 2 were 0 failures after 20 drops whereas for comparative sample was 10 failures out of 20 drops.

## Claims

1. Use of a heat shrinkable film comprising a heat sealing layer comprising an olefin block polymer for cook-in applications, wherein the olefin block polymer is an ethylene olefin block copolymer, and wherein the film comprises at least the heat sealing layer as an inner layer, a barrier layer incorporating a high oxygen barrier material and an outside layer.

2. The use of claim 1, wherein the ethylene olefin block copolymer is an ethylene octene block copolymer having a melting point of more than 115°C.

3. The use of one or more of the preceding claims, wherein next to the sealing layer there is a layer comprising polypropylene.

4. The use of claim 1, wherein the high oxygen barrier material is EVOH, PVDC or polyamide.

5. The use according to any of the preceding claims where the film comprises an outside layer incorporating
• a polypropylene polymer
• an ethylene alpha olefin copolymer
• a styrene butadiene polymer
• a polyamide
• a polybutene or
• an EVOH polymer, or a combination thereof.

6. The use according to any of the preceding claims incorporating between the outside and barrier as well as between sealing and barrier other layers incorporating other polymers.

7. The use according to any of the preceding claims where the film is irradiated.

8. The use according to any of the preceding claims having a flat or tubular form.

9. The use of a bag or pouch made by the film of one or more of claims 1-8 in cook-in applications.

10. A method of packaging and preserving a food product, comprising the steps of:
a) providing a film as defined in one or more of claims 1-8 or a bag or pouch as defined in claim 9, and a food product;
b) packaging the food product into said film, bag or pouch;
c) subjecting the packaged food product to an elevated temperature in a range of between 70-98°C, preferably 95°C for a time period between 1 and 18 hours thereby preserving the food product.

11. The method of claim 10, wherein the packaged food product is subjected to an elevated temperature by immersing in hot water.

12. A packaged food product obtainable by the method of claims 10 - 11.

## Patentansprüche

1. Verwendung einer wärmeschrumpffähigen Folie aufweisend eine Wärmesiegelschicht aufweisend ein Olefin-Blockpolymer für Cook-in-Anwendungen, worin das Olefin-Blockpolymer ein Ethylen-Olefin-Blockcopolymer ist und worin die Folie mindestens eine Wärmesiegelschicht als innere Schicht aufweist, eine Barriereschicht umfassend ein hochgradiges Sauerstoffbarrierematerial und eine äußere Schicht.

2. Die Verwendung gemäß Anspruch 1, worin das Ethylen-Olefin-Blockcopolymer ein Ethylen-Octen-Blockcopolymer mit einem Schmelzpunkt von mehr als 115 °C ist.

3. Die Verwendung gemäß einem der vorhergehenden Ansprüche, worin neben der Siegelschicht eine Schicht aufweisend Polypropylen vorhanden ist.

4. Die Verwendung gemäß Anspruch 1, worin das hochgradige Sauerstoffbarrierematerial EVOH, PVDC oder Polyamid ist.

5. Die Verwendung gemäß einem der vorhergehenden Ansprüche, wobei die Folie eine äußere Schicht aufweist umfassend
- ein Polypropylenpolymer
- ein Ethylen-alpha-Olefin Copolymer
- ein Styrol-Butadien Polymer
- ein Polyamid
- ein Polybuten oder
- ein EVOH-Polymer, oder eine Kombination davon.

6. Die Verwendung gemäß einem der vorhergehenden Ansprüche, umfassend andere Schichten umfassend andere Polymere zwischen der äußeren und der Barriere- sowie zwischen der Siegel- und der Barriereschicht.

7. Die Verwendung gemäß einem der vorhergehenden Ansprüche, wobei die Folie bestrahlt wurde.

8. Die Verwendung gemäß einem der vorliegenden Ansprüche, aufweisend eine flache oder tubuläre Form.

9. Die Verwendung einer Tüte oder eines Beutels, hergestellt aus der Folie gemäß einem oder mehreren der Ansprüche 1-8 in Cook-in-Anwendungen.

10. Verfahren zum Verpacken und Konservieren eines Lebensmittelprodukts aufweisend die Schritte:
a) zu Verfügung stellen einer Folie wie in einem der Ansprüche 1-8 definiert oder einer Tüte oder eines Beutels wie in Anspruch 9 definiert, und eines Lebensmittelprodukts;
b) Verpacken des Lebensmittelprodukts in dieser Folie, Tüte oder Beutel;
c) Unterwerfen des verpackten Lebensmittelprodukts einer erhöhten Temperatur im Bereich zwischen 70-98 °C, bevorzugt 95 °C für einen Zeitraum zwischen 1 und 18 Stunden, wodurch das Lebensmittelprodukt konserviert wird.

11. Das Verfahren gemäß Anspruch 10, worin das verpackte Lebensmittelprodukt einer erhöhten Temperatur durch Eintauchen in heißes Wasser unterworfen wird.

12. Ein verpacktes Lebensmittelprodukt, erhältlich gemäß dem Verfahren der Ansprüche 10-11.

## Revendications

1. Utilisation d'un film étirable à la chaleur comprenant une couche de scellement à la chaleur comprenant un polymère bloc d'oléfine pour des applications de cuisson, dans laquelle le polymère bloc d'oléfine est un copolymère bloc d'oléfine éthylène, et dans laquelle le film comprend au moins la couche de scellement à la chaleur comme couche interne, une couche barrière incorporant un matériau de barrière d'oxygène élevé et une couche externe.

2. Utilisation selon la revendication 1, dans laquelle le copolymère bloc d'oléfine éthylène est un copolymère bloc d'octène éthylène ayant un point de fusion de plus de 115 °C.

3. Utilisation selon une ou plusieurs des revendications précédentes, dans laquelle à côté de la couche de scellement il y a une couche comprenant du polypropylène.

4. Utilisation selon la revendication 1, dans laquelle le matériau de barrière à oxygène élevé est l'EVOH, le PVDC ou un polyamide.

5. Utilisation selon l'une quelconque des revendications précédentes où le film comprend une couche externe incorporant :
- un polymère de polypropylène
- un copolymère d'alfa oléfine éthylène
- un polymère de butadiène styrène
- un polybutène ou
- un polymère d'EVOH ou une de leurs combinaisons.

6. Utilisation selon l'une quelconque des revendications précédentes incorporant entre l'extérieur et la barrière ainsi qu'entre le scellement et la barrière d'autres couches incorporant d'autres polymères.

7. Utilisation selon l'une quelconque des revendications précédentes où le film est irradié.

8. Utilisation selon l'une quelconque des revendications précédentes ayant une forme plate ou tubulaire.

9. Utilisation d'un sac ou d'une poche constitué par le film selon une ou plusieurs des revendications 1 à 8 dans des applications de cuisson.

10. Procédé de conditionnement et de conservation d'un produit alimentaire, comprenant les étapes de :
a) fourniture d'un film tel que défini dans une ou plusieurs des revendications 1 à 8 ou d'un sac ou d'une poche tel que défini dans la revendication 9, et d'un produit alimentaire ;
b) conditionnement du produit alimentaire dans ledit film, sac ou poche ;
c) soumission du produit alimentaire conditionné à une température élevée dans une plage entre 70 et 98 °C, de préférence à 95 °C pour une période de temps entre 1 et 18 heures moyennant quoi le produit alimentaire est conservé.

11. Procédé selon la revendication 10, dans lequel le produit alimentaire conditionné est soumis à une température élevée par immersion dans de l'eau chaude.

12. Produit alimentaire conditionné que l'on peut obtenir par le procédé selon les revendications 10 à 11.
